# EUROPEAN PATENT SPECIFICATION

(11) **EP 2 769 024 B1**
(45) Date of publication and mention of the grant of the patent: **16.12.2015**
(21) Application number: 12779003.8
(22) Date of filing: 16.10.2012
(51) Int. Cl.: E02B 17/00, E02B 17/02, B63B 27/14, E04H 12/00

(54) **JACKET FOR OFFSHORE STRUCTURE**
MANTEL FÜR EINE OFFSHORE-STRUKTUR
CAISSON DE SUPPORT POUR STRUCTURE EN MER

(30) Priority: 17.10.2011 GB 201117885
(43) Date of publication of application: 27.08.2014
(73) Proprietor: Windsea AS, 1395 Hvalstad (NO)
(72) Inventor: LEFRANC, Marc, N-1395 Hvalstad (NO)
(74) Representative: Taylor, Adam David
(86) International application number: PCT/EP2012/070468
(87) International publication number: WO 2013/057093

(56) References cited:
- NL-C1- 1 015 937

## Description

The present invention relates to a jacket for an offshore structure and to a method for installing such a jacket. The offshore structure may for example be a foundation for a wind turbine.

As a consequence of increased energy demands and a desire to generate a larger amount of so called renewable energy an offshore wind industry has developed. An offshore wind farm avoids many of the restrictions placed on land-based wind farms by planning regulations and suchlike. It also makes transport and installation of large parts to the wind farm site considerably easier, since it is not necessary to design components to be transportable by road, which can restrict the size and weight of individual components. Many designs of offshore wind turbine have been installed and more are in development.

The turbine mechanism and the tower can be derived from land based technologies to some extent, since the basic requirements are the same, although offshore locations will permit windmills of greater size and hence turbines of considerably larger generating capacity. However, the foundation for an offshore turbine is naturally considerably difference to land-based foundations. Current plans involve wind farms placed in relatively deep water, perhaps depths in the range of 20 to 50 metres and with these depths the foundation becomes a significant part of the overall structure. Moreover, offshore wind farms may require the manufacture and installation of tens or hundreds of wind mills. As a result there is a need for a structure that can be manufactured and installed efficiently.

NL 1015937 C1 discloses a jacket for an offshore structure according to the preamble of claim 1.

Viewed from a first aspect, the present invention provides a jacket for an offshore structure, the jacket comprising: a plurality of jacket modules stacked one above the other, each of the jacket modules having multiple hollow legs; and a plurality of piles passing through the hollow legs for securing the jacket to the sea-bed; characterised in that the piles include: foundation piles passing through legs of a lowermost jacket module, with a lower part of each foundation pile extending downward below the lowermost jacket module into the sea-bed, and an upper part of the each foundation pile extending upward out of the tops of the legs of the lowermost jacket module and into legs of a second jacket module located atop the lowermost jacket module such that the upper parts of the foundation piles extend into the legs of the second jacket module by a height less than the height of the jacket modules; and follower piles within the legs of the second jacket module located atop the upper parts of the foundation piles and extending upward out of the tops of the legs of the second jacket module.

The invention hence provides a modular construction that enables a jacket to be prefabricated in easily transportable parts. For example, the jacket modules might be between 12 and 18 metres in height, the follower piles may be the same length as the height of the modules, and the foundation piles might have lengths of 25 to 45 metres more than the height of the modules, the extra length including a length that extends into the sea-bed. The length of the pile in the sea-bed is determined based on soil conditions and on the expected loading on the offshore structure. These parts can be assembled upon installation without the need for specialist vessels or complicated moorings. The parts are small enough and light enough to be conveyed on relatively small barges and can be lifted by standard cranes. Vessels of an appropriate size to install the modular system are more widely available and cheaper to operate than the larger and more complex vessels that would be required in order to handle larger components. The modular system can also be installed in a time efficient manner, more quickly more complex installations and also with several small vessels operating in parallel. Thus, a greater number of jackets can be installed in a given time.

The piles extend throughout the entire height of the modules but are separated into different segments with the piles and jacket modules overlapping. This provides a strong and stable structure. Preferably the piles in the legs of a lower jacket module extend upwardly into the legs of the next jacket module up by a distance of 20% to 50% of the height of the modules.

The upper part and lower part of each foundation piles may be separate pile segments. This has the advantage of reducing the maximum length of the foundation pile components. With this arrangement there may be a joint between the upper part and lower part. Preferably this joint has the same coupling as the coupling between the foundation pile and follower pile, which is discussed in more detail below. In a particularly preferred arrangement of this type the upper part of the foundation pile may be similar or identical to the follower piles, and hence may have the same dimensions and shape.

In an alternative arrangement the foundation pile is formed in a single uninterrupted length with the upper part and lower part being top and bottom parts of this single length.

In a preferred embodiment the piles are arranged to extending upwardly into the legs of the next jacket module by different amounts. In particular, there may be at least a first guide pile that extends upwardly into the legs of the next jacket module by a greater length than the other piles. This guide pile can be used as a first landing point for the next jacket module (or upper structure) when it is installed, avoiding the need to align the legs of this module with all four piles at once. Preferably, there is also a second guide pile that extends upwardly into the legs of the next jacket module by a length less than the first guide pile but greater than the remaining piles. Using two guide piles in this way means that with two steps of landing the next jacket module first on the first guide pile, and then on the second guide pile, the modules can be easily aligned.

The amount of overlap may for example be at least 4 m for a 12 m high jacket module. With this size of module, the first guide pile may extend into the legs of the next jacket module by 5.5 m, the second guide pile may extend into the legs of the next jacket module by 4.5 m and the remaining two piles may extend into the legs of the next jacket module by 4 m.

The second jacket module may be the uppermost jacket module. However, it is preferred to use at least one additional jacket module and also additional follower piles. Thus, the jacket may comprise: a third jacket module atop the second jacket module, with the follower piles in the legs of the second jacket module being a first set of follower piles and extending upward into the legs of the third jacket module; and a second set of follower piles within the legs of the third jacket module located atop the first set of follower piles and extending upward out of the tops of the legs of the third jacket module. There may be further modules and piles, for example a fourth jacket module and a third set of follower piles. In some preferred embodiment the jacket includes a total of only three jacket modules.

Preferably the jacket comprises an upper structure mounted on the exposed parts of the uppermost follower piles above the uppermost jacket module. The upper structure could be any desired structure for completing the offshore installation or for providing a platform for installation of additional structures or apparatus. In a preferred embodiment, the upper structure is a transition piece for mounting a tower, such as a wind turbine tower, on the jacket.

The transition piece is preferably pre-fabricated onshore and may have a central structure for supporting a tower or the like and outer connecting parts for coupling to the exposed parts of the uppermost follower piles. The outer connecting parts may be hollow cylinders with dimensions similar to the hollow legs of the jacket modules. The central structure and outer connecting parts may be joined by a platform structure and/or by beams or similar. In one preferred arrangement the transition piece is integrated with a tower such as a wind turbine tower.

It is preferred for the piles to be secured within the legs of the jacket modules by grout. The grout may be grout that has been pumped into the legs around the piles after assembly of all the jacket modules and piles is completed. When an upper structure is present the grout preferably also surrounds the piles within the outer connecting parts and hence secures the upper structure to the jacket. With the use of grout the hollow legs should have a cross-section larger than the cross-section of the piles, preferably a cross-section arranged to permit grout to surround the piles. For example the legs may be round tubes of 1 to 1.5 metres diameter and the piles may be cylinders with a diameter 20% to 40% smaller than the diameter of the legs.

The grout ensures a secure connection between the piles and jacket modules and provides the necessary tensile strength to prevent instability and failure of the jacket when vertical or horizontal loads on the offshore structure generate tensile loads on the jacket. Other coupling methods for joining the piles and jacket modules are possible. For example the piles and legs may be joined via mechanical couplings such as bolts passing through the legs and piles. However, grout is preferred. Grouting does not require any accurate vertical alignment of the piles and legs. Also, the grouting of each leg of the jacket can be completed in one simple operation by pumping grout into the base of the leg using conventional grouting techniques.

With the overlap of the piles and the hollow legs of the modules it is not necessary for the adjacent jacket modules to incorporate any coupling mechanism for transferring loads, aside from abutment of adjacent modules to transfer compression loads. However, it is preferred for the jacket modules to include connectors for providing a seal about the joint between adjacent hollow legs, in order to more effectively contain grout within the hollow legs. The connectors may take the form of a connecting ring provided at the base or top of each tubular leg of the jacket modules, at least a portion of the ring having a diameter larger than the outer diameter of the legs in order to overlap with the top part of a corresponding leg of an adjacent jacket module. The overlap is relatively small, for example it may be about a quarter of the width/diameter of the legs. The connectors may include a tapered or wedge shaped portion to guide the connectors onto the adjacent jacket module and/or to provide a tight friction fit and seal one leg to the other. The connectors may incorporate an O-ring or similar sealing mechanism. It is preferred for the legs and connector parts to be generally circular although the invention is not limited only to circular geometries.

Preferably the hollow legs include internal lugs for locating the piles at the centre of the legs and spacing the piles away from the walls of the legs. Advantageously this ensures an even and accurate spacing for grout injection. It also ensures that adjacent piles are aligned with one another.

As explained above, the piles are placed atop one another inside the hollow legs of the jacket modules. Preferably, the ends of the piles are shaped for interlocking fit with the next pile. Hence, the follower piles may be provided with a male coupling and one end and a female coupling at the other end. Preferably the female coupling is designed for a friction fit with the male coupling. This ensures a positive connection and alignment of the piles, and a good contact surface for transfer of compression loads. When a grouted system is used, this avoids the need for welding of the piles to one another as is required in some prior art constructions. By avoiding the need for welding the complexity of the offshore installation operation can be considerably reduced. The installation operation can also be completed in less time. The piles can be simply lowered into the hollow legs and there is no need for offshore welding equipment or complicated support arrangements to hold two piles in place whilst welding occurs.

The upper parts of the foundation piles may be provided at their upper ends with a male or female coupling, as appropriate. The lower ends of the lower parts of the foundation piles may have a conventional geometry to facilitate driving the pile into the sea-bed. Preferably the upper ends of the upper parts of the foundation piles include a flat surface to permit connection of a hammer to drive the pile into the sea-bed.

The follower piles are preferably provided with a coupling at a first end with a geometry that corresponds to the coupling geometry of the top end of the foundation pile. The opposite end of the follower piles may have a coupling of the opposite type. Using similar couplings for the foundation piles and follower piles means that there are only two coupling types. The tooling required to manufacture the piles is simpler as a result.

In one preferred embodiment the upper ends of the upper parts of the foundation piles comprises a shoulder around a protruding conical or frustoconical element. The follower piles in this embodiment hence are oriented with a female coupling at their lower end to accommodate the protruding part of the upper ends of the foundation piles. This female coupling may comprise a socket with a conical or frustoconical internal volume. The other end of the follower pile preferably has the same male coupling geometry as the top end of the upper part of the foundation pile.

The jacket modules may comprise the hollow legs with trusses or beams between the legs. The lowermost jacket module may further comprise mud mats at the bases of the hollow legs.

Preferably the jacket modules are designed with an arrangement of legs that is rotationally symmetrical about an axis extending parallel with the legs, i.e. an axis that is generally vertical when the jacket module is in its installed orientation. The degree of rotational symmetry preferably corresponds to the number of legs. For example, if the jacket module has three or four legs then it should have a threefold or fourfold rotational symmetry. The jacket modules may be entirely rotationally symmetrical. For example, the jacket modules may comprise symmetrically arranged legs joined by similar truss arrangements.

With a symmetrical arrangement when placing one jacket module atop another it s only necessary to align the legs and there is no other restriction on the relative orientation of the two modules. This can lead to significant benefits when installing the modules. With cost efficient small vessels the vessel generally must be anchored in a set orientation relative to the wind and/or wave direction. The modules would be loaded onto the vessel in a particular orientation and hence lifted and installed in that orientation. If a symmetrical construction was not used then in the event that the wind and/or wave direction changed during installation it would not be possible to continue the installation using small cost effective vessels without complicated additional equipment to rotate the modules by a significant amount when lifted. With a symmetrical construction the same small and efficient vessel can continue the installation even if the prevailing sea and wind conditions change, since there would only ever need to be a small rotation of the jacket modules to align the legs with the previously installed modules. For example, with a fourfold symmetry the maximum rotation would be ±22.5° as compared with ±180° for a non-symmetrical system.

The jacket may include a J-tube for passage of cables and the like from the sea-bed to the top of the jacket. Preferably the J-tube includes an angled section at the base of the lowermost jacket module, which may be prefabricated with the lowermost jacket module. The angled section may comprise a lower generally horizontal part for receiving a cable running generally horizontally along the floor, a bend that turns the cable through about a right angle, and an upper generally vertical part so that the cable exits the angled section running generally vertically. Conventionally, a J-tube will also include a vertical section of tubing running from the angled section to the top of the jacket. In preferred embodiments however the J-tube of the present jacket does not include such a vertical section. Instead, the cabling is passed from the generally vertical exit portion of the angled section to the top of the structure without being enclosed in a tube. It has been found that it is not necessary to enclose the cabling for many offshore structures, including wind turbines. Omitting the vertical tubing makes the construction and installation of the jacket simpler, and also makes it easier to install cables through the J-tube. There may be cable restraints spaced apart up the height of the modular structure, such as rings mounted on legs of the modules. The use of cable restraints keeps the cables in place during wave and tidal water movements.

Preferably, the J-tube is located adjacent to a leg of the lowermost module and may be clamped to the leg. In a preferred embodiment, the J-tube can be rotated in order to direct the lower generally horizontal part of the angled section in any desired direction. This means that the J-tube can receive cabling running from any direction, and hence avoids the need to orient the jacket relative to the direction of the cabling. In a particularly preferred embodiment there may be two J-tubes mounted adjacent to two opposite legs of the lowermost jacket module. The two J-tubes are preferably both rotatable. This means that the jacket can receive cabling from any direction without the need to run the cabling beneath or through the jacket before it reaches a J-tube.

The advantages of symmetry apply to installation of the upper structure as well. Preferably this structure is arranged to be installed in any orientation relative to the piles extending from the symmetrical legs of the uppermost jacket module. This is of particular advantage when the upper structure includes parts that should be oriented in a particular way relative to the prevailing wind direction, for example access ways such as gangways and/or boarding platforms that should desirably be placed leeward of the structure, the leeward direction being to the lee of the jacket relative to usual weather conditions.

Hence, in a particularly preferred embodiment the jacket comprises an upper structure such as a transition piece that is prefabricated with an access way, wherein the jacket module has a rotationally symmetrical arrangement and the upper structure is hence able to be oriented as desired upon installation.

The jacket modules may have three or more hollow legs. In a preferred embodiment four legs are used. This allows the jacket modules to have a square cross-section and cube shaped modules may be used. With a square and preferably cubic shape the jacket modules can be formed by a simple truss structure with similar joints and trusses at each side. This makes mass production of the jacket modules simpler and a square or cubic shape also permits effective use of space when storing and transporting the modules.

A preferred embodiment is intended for use in water depths of 25 m to 60 m, and may have jacket modules of a generally cubic truss construction with legs at each corner and a height/width of between 10 m and 20 m. In preferred arrangements using three jacket modules the total height of the jacket, excluding the upper structure will hence be 30 m to 60 m. The jacket may be designed to extend 10 m to 15 m above water level when the foundation is installed on the sea-bed.

The jacket has been developed with a focus on the offshore wind industry and hence in a preferred embodiment the jacket is a foundation for an offshore wind turbine. The invention extends to an offshore wind turbine structure incorporating the described jacket. However, the jacket may also be advantageously utilised in other offshore sectors such as oil and gas.

Viewed from a second aspect, the invention provides a method of installation of a jacket for an offshore structure, the jacket comprising: a plurality of jacket modules, each of the jacket modules having multiple hollow legs; and a plurality of piles; wherein the method comprises: locating a first, lowermost, jacket module on the sea-bed; and is characterised by installing foundation piles through the legs of this lowermost jacket module such that lower parts of the foundation piles extend downward below the lowermost jacket module into the sea-bed and upper parts of the foundation piles extend upward out of the tops of the legs of the lowermost jacket module by a height less than the height of the jacket modules; locating a second jacket module atop the lowermost jacket module such that the upper parts of the foundation piles extend into the legs of the second jacket module; and installing follower piles within the legs of the second jacket module such that the follower piles are located atop the upper parts of the foundation piles and extend upward out of the tops of the legs of the second jacket module.

The method of the invention enables installation of the jacket without the need for specialist vessels or complicated moorings. The parts are small enough and light enough to be conveyed on relatively small barges and can be lifted by standard cranes. The jacket modules, piles and other parts may have features as discussed above in relation to the first aspect of the invention.

Thus, although the second jacket module may be the uppermost jacket module it is preferred to use at least one additional jacket module and also additional follower piles. The method may hence comprise: the follower piles in the legs of the second jacket module being a first set of follower piles; locating a third jacket module atop the second jacket module such that the first follower piles extend into the legs of the third jacket module; and installing a second set of follower piles within the legs of the third jacket module such that the second follower piles are located atop the first follower piles and extend upward out of the tops of the legs of the third jacket module.

In a preferred method the foundation piles are installed extending upward from the lowermost jacket module by a length of from 20% to 50% of the height of the jacket modules. The follower piles may protrude upward from the second jacket module and optional further jacket modules by a similar length.

In a preferred embodiment the piles are installed such that they extend upwardly into the legs of the next jacket module by different amounts. This may be done by installing the foundation piles at different depths in the sea-bed, or by providing foundation piles of different lengths for installation at the same depth in the sea-bed. When the follower piles all have the same length, which is preferably a length corresponding to the height of the modules, then the differing heights of the foundation piles will be recreated above the second jacket module by the exposed parts of the follower piles.

There may be at least a first guide pile that extends upwardly into the legs of the next jacket module by a greater length than the other piles, and the method may include locating the next jacket module by first landing one leg on the first guide pile, and then aligning the module with the other piles. Preferably, the method includes installing a second guide pile that extends upwardly into the legs of the next jacket module by a length less than the first guide pile but greater than the remaining piles. With the use of a second guide pile, the method of installing the next jacket module may include landing a first leg of the next jacket module on the first guide pile, and then aligning a second leg of the jacket module with the second guide pile and landing the second leg on the second guide pile so that the remaining legs and piles are aligned.

The method may comprise mounting an upper structure on the exposed parts of the uppermost follower piles above the uppermost jacket module. The upper structure may be a structure as described above. Prior to mounting the upper structure the exposed parts of the piles are preferably cut to a desired uniform length.

In a preferred embodiment the method comprises grouting about the piles inside the hollow legs in order to thereby secure the piles within the legs. The grout is preferably pumped into the legs around the piles after assembly of all the jacket modules and piles is completed. When an upper structure is present grouting preferably also occurs after mounting of the upper structure so that the grout surrounds the piles within outer connecting parts of the upper structure and hence secures the upper structure to the jacket. The grouting of the upper structure to the piles preferably occurs in a separate step to the grouting of the jacket module to the piles, with the step of grouting the jacket module to the piles being completed before the upper structure is fitted.

The method may include grouting in one of the following sequences:
1. Grout the legs of the jacket modules and the connection to the upper structure in one sequence, then install the tower or other functional part atop the upper structure.
2. Grout all jacket modules in a first step, with the connections to the upper structure being grouted in a second, separate step, after installation.
3. Grout a few metres (for example, 4 metres) at the base of the lowermost jacket module, plug, then grout to the top, with the second grouting stage optionally including grouting of the upper structure to the jacket.

The step of locating a jacket module atop a lower jacket module may include aligning the legs of the jacket module. Preferable the legs include connectors as discussed above and the alignment uses tapered or wedge shaped parts of the connectors to guide the connectors onto the ends of the legs of the adjacent jacket module.

In preferred embodiments the piles have male and female couplings as explained above and the method comprises locating the male part of one pile within the female part of another pile during installation of the follower piles, as the follower pile is lowered into the hollow leg.

The preferred jacket modules are symmetrical as described above. The method of the invention may comprise aligning the legs of the jacket modules when placing one jacket module atop another. Preferably the method includes installing an upper structure comprising outer connecting parts and the method comprises aligning the outer connecting parts with the exposed parts of the uppermost follower piles. In preferred embodiments the upper structure is prefabricated with an access way and during installation of the upper structure it is aligned with the access way leeward of the jacket.

The method may be used as a part of a method of installation of an offshore wind turbine and hence the method may comprise installing an upper structure in the form of a transition piece for holding a turbine tower and installing a tower, turbine and wind mill on the jacket. The method may comprise connecting cabling to the jacket, preferably via a J-tube arrangement as described above. In the preferred embodiment where the J-tube is rotatable the method may comprise rotating the J-tube to direct it toward the direction of the cabling on the sea-bed.

It will be appreciated that the jacket structure is essentially manufactured and transported in kit form. Hence, viewed from a third aspect, the invention provides a kit of parts for a jacket, the kit of parts comprising: a plurality of jacket modules arranged to be stacked one above the other, each of the jacket modules having multiple hollow legs; and a plurality of piles arranged for passing through the hollow legs for securing the jacket to the sea-bed; characterised in that the piles include: foundation piles for passing through legs of a lowermost jacket module, extending downward below the lowermost jacket module into the sea-bed, and extending upward out of the tops of the legs of the lowermost jacket module and into legs of a second jacket module located atop the lowermost jacket module such that the foundation piles extend into the legs of the second jacket module by a height less than the height of the jacket modules; and follower piles for installation within the legs of the second jacket module located atop the foundation piles and extending upward out of the tops of the legs of the second jacket module.

Thus, the kit comprises modules and piles, the length and size of the piles being such that they can be installed as required in the structure of the first aspect. The jacket modules and/or piles may have features as discussed above in relation to the first aspect, and they may be arranged for installation as described above. The kit may also include further features as described above such as at least one additional jacket module and additional follower piles, an upper structure and so on.

The J-tube concept described above is considered to be novel and inventive in its own right and hence, view from a further aspect, the invention provides a J-tube system for passage of cables and the like from the sea-bed to the top of an offshore structure, the J-tube comprising an angled section including a lower generally horizontal part for receiving a cable running generally horizontally along the floor, a bend that turns the cable through about a right angle, an upper generally vertical part so that the cable exits the angled section running generally vertically, and an open non-enclosed cable run extending from the top of the generally vertical part toward the top of the offshore structure. With this J-tube the cabling is hence passed from the generally vertical exit portion of the angled section to the top of the structure without being enclosed in a tube. As noted above, omitting the vertical tubing makes the construction and installation of the jacket simpler, and also makes it easier to install cables through the J-tube. This aspect extends to an offshore structure or a foundation part of an offshore structure incorporating the J-tube. The foundation part may be a jacket type foundation of the type described above. The J-tube system may include cable restraints spaced apart up the height of the modular structure, such as rings mounted on legs of the modules. Preferably, the J-tube is located adjacent to a leg of the foundation part and may be clamped to the leg. In a preferred embodiment, the J-tube can be rotated relative to the offshore structure or foundation part in order to direct the lower generally horizontal part of the angled section in any desired direction. In a particularly preferred embodiment the J-tube arrangement comprises two J-tubes mounted adjacent to two opposite legs of the lowermost jacket module.

Whilst sea level and the sea-bed are referred to above it will be understood that the structures described above may also be used in any suitable body of water, such as seas, oceans, estuaries, inland lakes and reservoirs. Hence, any reference to sea level should be understood to mean a datum water level for the desired location of the structure in any body of water. Similarly, any reference to the sea-bed should be understood to refer to the bottom of the body of water.

As used herein the terms top and bottom and other terms relating to relative vertical location such as upper and lower are intended to reference the normal installed orientation of parts of the jacket and offshore structure. Thus, for example, the top of a pile is the part that is uppermost when it is installed, and the bottom of a pile is the opposite end of the pile. Naturally the parts of the structure may be manufactured and transported in other orientations.

Certain preferred embodiments of the invention will now be described by way of example only and with reference to the accompanying drawings in which:
Figure 1 is a partially exploded isometric view of a jacket and wind turbine, with some ancillary parts omitted for clarity;
Figure 2 is a side elevation of the jacket;
Figure 3 is a plan view of the jacket with the transition piece omitted;
Figures 4 to 10 show the installation of the jacket on the sea-bed;
Figure 11 is an illustration of the detail of the connection between piles within the legs of the jacket, with exaggerated diameter;
Figure 12 is an elevation of a part of the installed jacket with gangway with the gangway retracted;
Figure 13 is a similar elevation to Figure 12, with the gangway deployed; and
Figure 14 shows the detail of the connection between the lower portion of the gangway and a leg of the jacket.

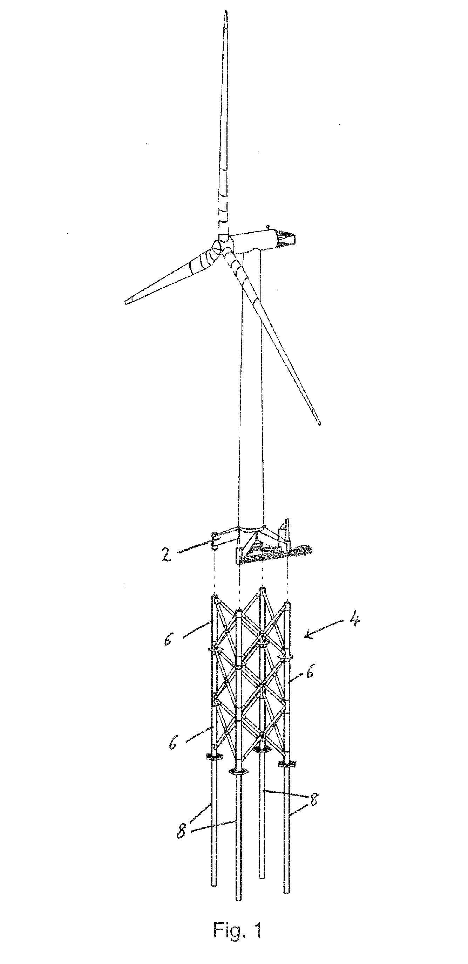

The preferred embodiment is described in the context of a jacket for a wind turbine, as shown in Figure 1. The wind turbine and tower can be of generally conventional construction and hence are not described in any further detail. The tower is mounted on a transition piece 2 that is installed atop the jacket 4. The jacket 4 comprises three jacket modules 6 secured to the sea-bed by piles 8. Figure 1 shows the extent of the piles beneath the jacket into the sea-bed. In this preferred embodiment the jacket modules 6 are 12 m in height and width, with a generally cubic shape. The piles 8 may extend by around 30 m into the sea-bed, the actual depth being decided depending on soil conditions and on the expected loading on the wind turbine. The jacket 4 is sized so as to allow for one of the three modules to protrude above the reference water level.

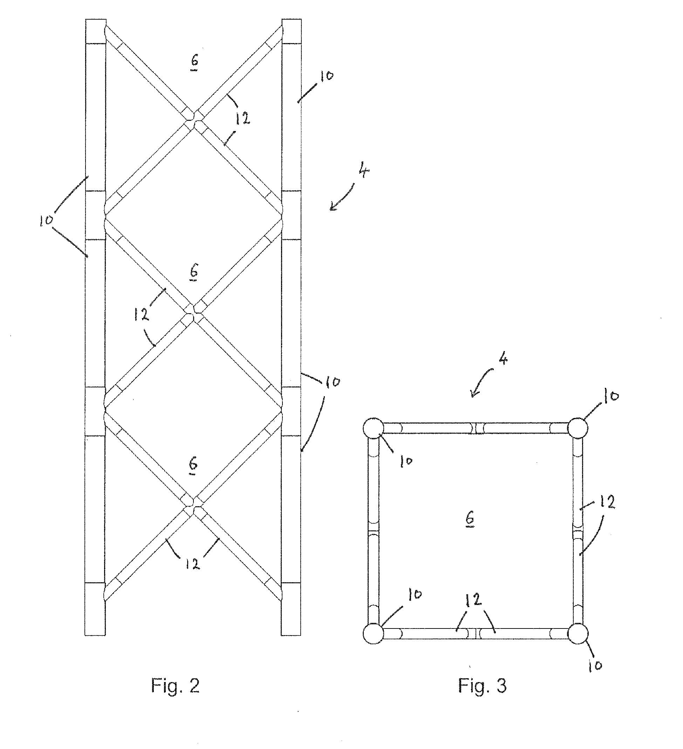

Figures 2 and 3 show the jacket 4 in greater detail. Each jacket module 6 is a cube shape with four hollow legs 10 along the vertical edges, which are joined on each vertical outer surface of the cube by a truss structure formed by two cross-beams 12 in an X shape. The preferred embodiment shown in the drawings does not include any other cross beams. However, if required for structural strength then horizontal cross-beams can be added above and/or below the X-shaped beams 12. As can be seen clearly in the plan view of Figure 3 the jacket modules 6 do not include any beams across the middle of the structure either inside the cube shape or at the horizontal outer surfaces of the cube shape. The preferred embodiment uses tubular hollow beams. In the context of jacket designed to support an offshore wind turbine the hollow beams for this 12 m cube have a diameter of 1.2 m for the hollow legs 10 and a diameter of 0.6 m for the cross-beams 12.

The lowermost jacket module 6 includes mud mats to support the jacket module on the sea-bed. The mud mats may be adapted according to soil conditions in a conventional fashion. The jacket 4 also includes J-tubes (not shown) for passage of cables and the like from the sea-bed to the top of the jacket 4. The J-tubes (not shown) are mounted to the base of legs 10 of the lowermost jacket module 6 and can be rotated. Each J-tube includes an angled section with a lower horizontal part that receives a cable running generally horizontally along the floor, a bend that turns the cable through a right angle, and an upper vertical part so that the cable exits the angled section running vertically upward toward the top of the jacket. Unlike a conventional J-tube the J-tubes in this preferred embodiment do not include a vertical section of tubing running from the angled section to the top of the jacket. Instead, the cabling is passed from the vertical exit portion of the angled section to the top of the structure without being enclosed in a tube. Rings mounted on legs 10 of the modules 6 keep the cables in place during wave and tidal water movements.

After installation of the jacket 4 the J-tube closest to the incoming cabling is rotated in order to direct the lower horizontal part of the angled section in the direction of the cabling. The cabling can then be installed through the J-tube and up to the top of the structure via the rings.

The transition piece 2 comprises a central circular structure for supporting a turbine tower and four triangular beams 14 extending outwardly away from the central structure and tapering toward outer connecting parts at the end of each beam 14, which connect to the tops of piles extending upwardly from the uppermost jacket module 6. The beams 14 have a box beam construction.

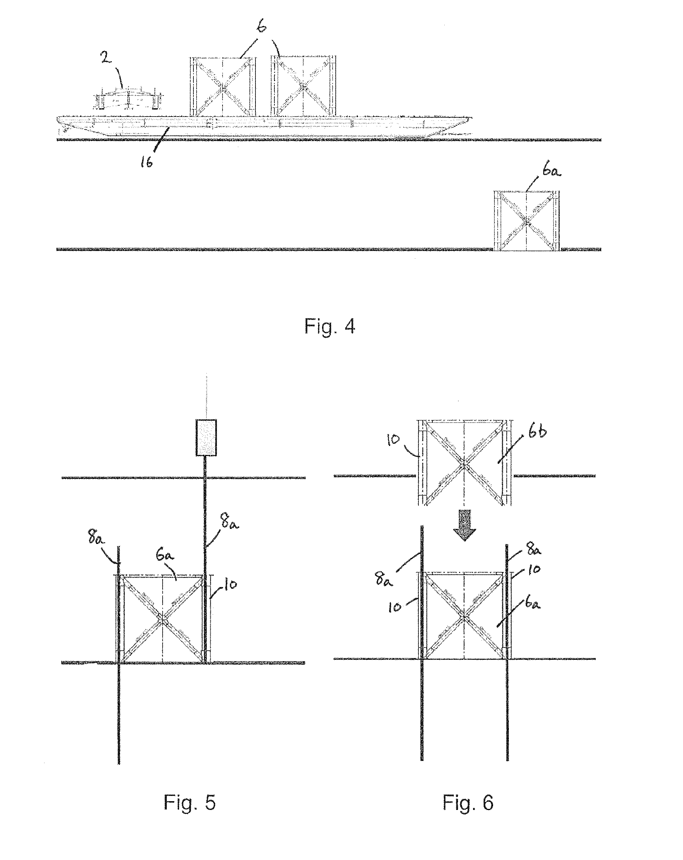

Further details of the structure of the jacket 4 will be apparent from the following discussion of installation of the jacket 4, with reference to Figures 4 to 10. The three jacket modules 6, transition piece 2 and piles 8 are conveyed to the installation site by barge 16 and the first, lowermost, jacket module 6a is lowered to the desired position on the sea-bed by crane. Figure 4 shows a barge 16 with second and third jacket modules 6b, 6b and the transition piece 2 on deck, and the first jacket module 6a located on the sea-bed. Four foundation piles 8a are inserted into the hollow legs 10 of the first jacket module 6a and as shown in Figure 5 these are driven through the legs 10 and into the sea-bed. The pile driving is done partly in air and partly with the hammer submerged. As noted above, the extent of the foundation piles 8a into the sea-bed might be about 30 m. The upper end of the foundation pile 8a is left protruding from the tops of the legs 10 of the first jacket module 6a.

For this example using 12 m high jacket modules 6 the exposed length of the pile is at least 4 m. Two of the foundation piles 8a are exposed by 4 m. The other two piles are left with a greater exposed height in order to provide guide piles to facilitate simple alignment of the next jacket module. In this preferred embodiment a first guide pile extends 5.5 m above the tops of the legs 10 and a second guide pile extends 4.5 m above the tops of the legs.

As an alternative to driving the foundation piles 8a into the sea-bed with a hammer the piles could be installed in pre-drilled holes and secured in place by grout or the like.

When the foundation piles 8a are in place the second jacket module 6b is lowered onto the exposed upper ends of the foundation piles 8a. This step is shown in Figure 6. The second jacket module 6b is first aligned with the first guide pile, which is the foundation pile that extends out of the lowermost jacket module 6a by the greatest height. The second jacket module is landed on this first guide pile, and this provides a first fixed point. Then, when the first guide pile is engaged with the second jacket module 6b, then the jacket module can be rotate to align with the second guide pile. Landing the second jacket module on the second guide pile fixes the jacket module rigidly in place, preventing further rotation. When it is slid down the first and second guide piles it should be correctly aligned with the remaining two foundation piles 8a, allowing it to be easily located on all four piles.

When the second jacket module 6b is in place follower piles 8b are installed in the legs 10 of the second jacket module 6b. The follower piles 8b have a length that is the same as the height of the jacket modules 6, and hence they protrude out of the tops of the legs of the second jacket module 6b by the same length that the foundation piles 8a protrude from the lowermost jacket module 6a. This means that the follower piles 8a will include first and second guide piles with extra height corresponding to the extra height of the guide piles in the foundation piles 8a.

The third jacket module 6c and a further set of follower piles 8b are then installed atop the second module 6b in a similar fashion.

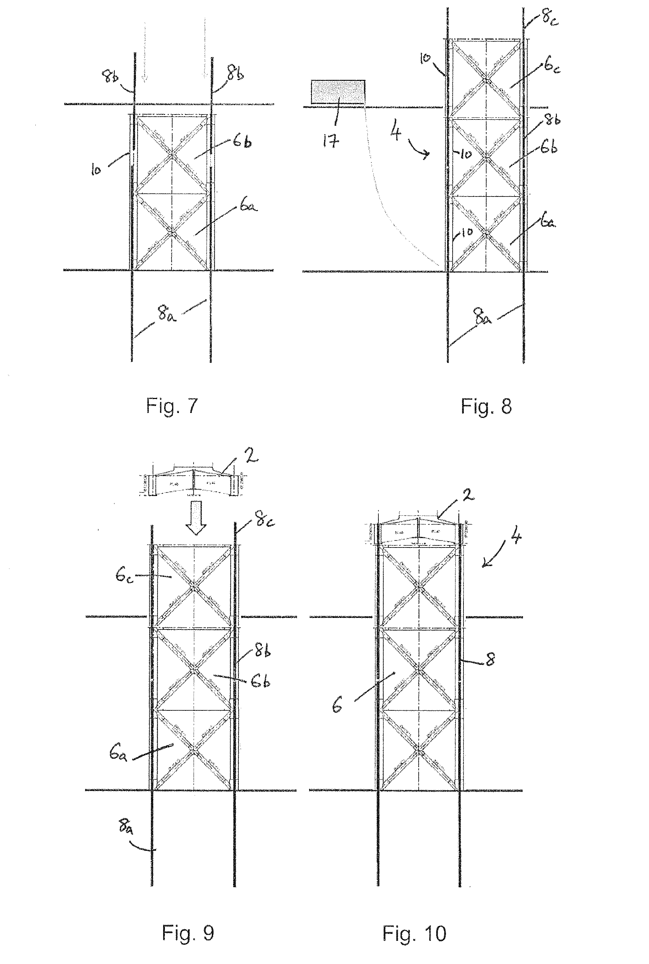

When all the jacket modules 6 and piles 8 have been installed grout is pumped into the space between the piles 8 and the jacket legs 10. The grout is pumped upward from the base of the jacket using conventional grout injection techniques and a grouting vessel 17, which is shown schematically in Figure 8. The grout forms the connection between the piles 8 and the jacket legs 10 and ensures that the jacket columns can carry vertical tensile loads.

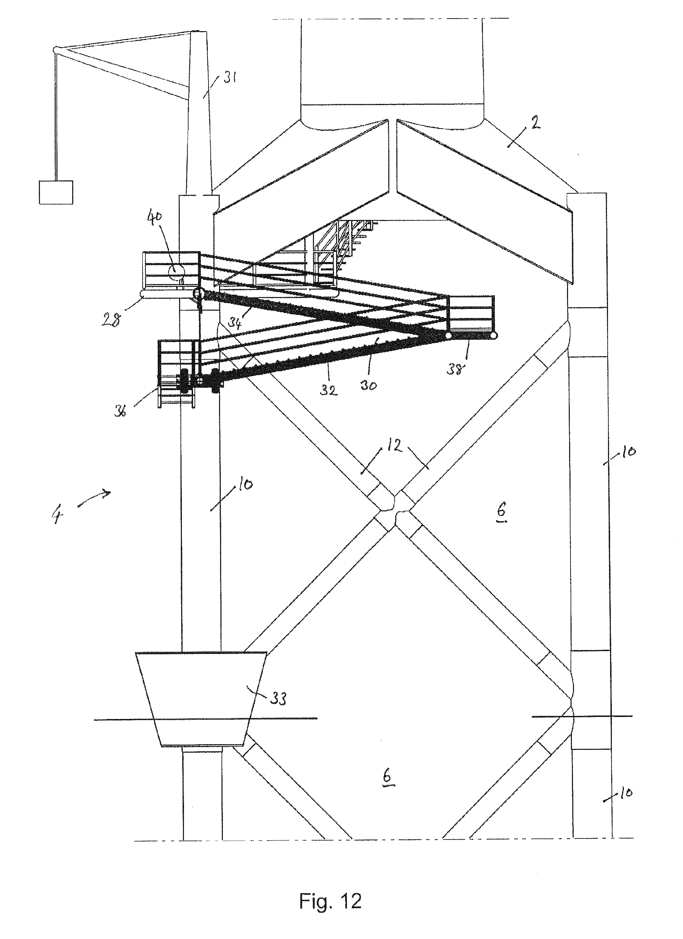

The exposed pile ends at the top of the partially constructed jacket are cut to make them level with each other, and to provide an exposed length suitable for supporting the transition piece 2, which is installed on the exposed pile ends as shown in Figure 9. The transition piece 2 is pre-fabricated with an access way 18, which is not shown in Figure 9 but is described below with reference to Figures 12, 13 and 14. Before the transition piece 2 is installed it is rotated so that the access way 18 is on the leeward side of the jacket 4. Since the transition piece 2 and the other parts of the jacket 4 have a rotationally symmetrical structure it can be installed in any rotational orientation relative to the jacket modules 6.

With the transition piece 2 in the correct orientation the four connecting parts of the transition piece 2, which take the form of cylindrical sockets with similar dimensions to the hollow legs 10 of the jacket modules 6, are placed on the top ends of the piles 8, and then grout is injected to secure the transition piece 2 in place. The jacket 4 is then complete, as shown in Figure 10. The transition piece 2 may optionally be installed with the turbine tower already in place, the tower and transition piece 2 having been assembled together onshore.

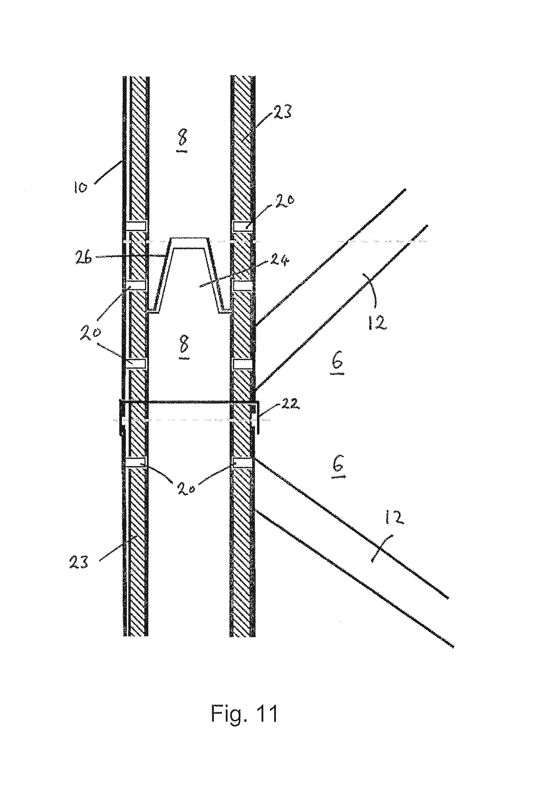

Further details of the inter-module and inter-pile connections will now be described with reference to Figure 11. Figure 11 shows a cross-section of the jacket leg and piles at a join between two modules, with the diameter of the leg and piles exaggerated compared to the overlap length. As explained above, the length of overlap would be 4 m in this embodiment.

The hollow legs 10 of the jacket modules 6 include internal lugs 20 protruding from the wall of the leg and acting to locate the piles 8 in the centre of the hollow legs 10 and also to maintain a set minimum spacing between the piles 8 and the walls of the hollow legs 10. In addition, the legs 10 include a connecting ring 22, which in this case is at the bottoms of the legs 10 of the upper module 6. The connecting ring 22 has an inner diameter generally larger than the outer diameter of the legs and includes a tapered part that acts to guide the two legs into alignment and to give a tight, wedged fit of one leg onto the other. An O-ring seal is also included, to ensure that the connecting ring 22 seals the joint between the two legs 10 and contains the grout 23 that is later pumped into the space between the piles 8 and the walls of the hollow legs 10.

The two piles 8 are designed to interlock using a plug and socket type arrangement. The lower pile 8 has a male joint 24 consisting of a truncated cone protruding upward from a flat, with a shoulder about the base of the cone. The shoulder can be used for impacting the hammer when a foundation pile 8a is driven into the sea-bed. The upper pile 8 has a female joint 26 of complementary shape, with a frustoconical volume for receiving the truncated cone of the male joint 24. Advantageously, the cone shape provides a tight fit that prevents undesirable ingress of grout into the join between two piles 8. The foundation pile 8a has the male joint 24 at its upper end. The follower piles 8b are provided with a female joint 26 at one end and a male joint 24 at the other end.

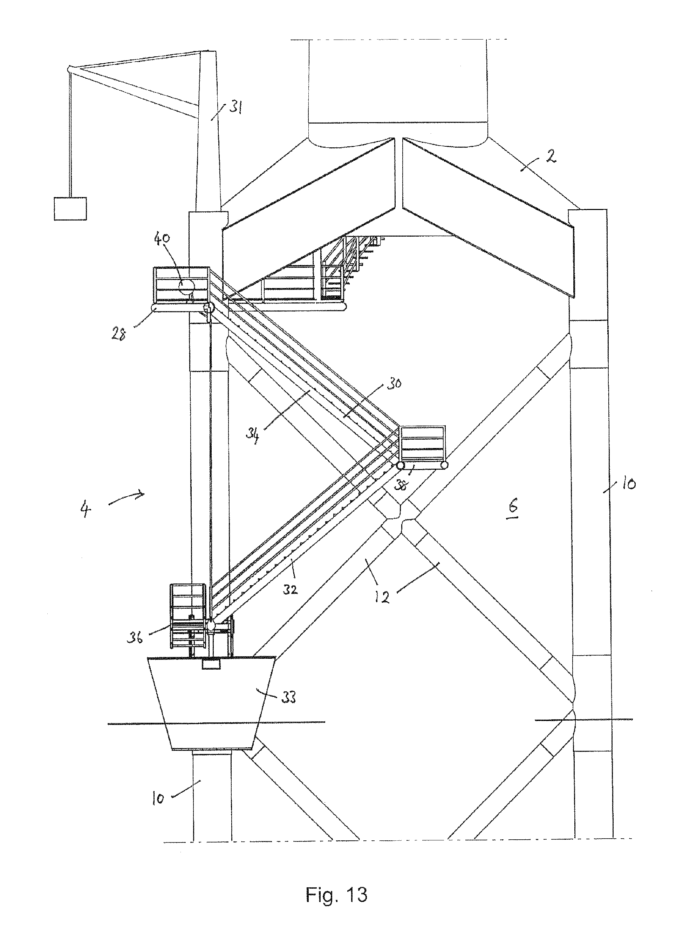

Figures 12 and 13 show further detail of the constructed jacket and tower and ancillary parts that are installed on the transition piece 2. These ancillary parts include a deck area 28 on the transition piece that joins to a gangway 30, and a crane 31. The crane 31 is used to load parts and equipment onto the deck area 28 from a vessel 33 below. The deck area 28 also joins to a stairway up into the tower that provides access into the tower from beneath the base of the tower. Advantageously this avoids the need to cut a doorway into the tower, which means that the tower is not weakened by holes in its structure.

As noted above, the deck area 28 and gangway 30 are prefabricated on the transition piece 2 and during installation of the transition piece 2, with or without the tower, it is rotated to place the gangway 30 on the leeward side of the jacket. The final stage of the installation process is to connect the gangway 30 to a leg 10 of the upper jacket module 6. Prefabrication of these ancillary parts with the transition piece 2 means that complicated construction and assembly occurs on land rather than at the offshore installation site.

The gangway 30 provides access to the deck area 28 and turbine tower from a vessel. It is an articulated stairway with upper and lower parts in the form of flights of stairs 32, 34 that join the deck area 28 to an access platform 36 at the base of the stairway. The upper flight 34 is connected to the deck area 28 at one end and extends away from the deck area 28 to an intermediate platform 38. At the intermediate platform 38 the direction of the stairway reverses and the intermediate platform 38 connects to the lower flight 34, which runs back toward the deck area 28, ending at the access platform 36, which in this embodiment is located generally beneath the starting point for the upper flight 32, where it joins the deck area 28.

The upper and lower flights 32, 34 are rotatably connected to each other via the intermediate platform 38 and the upper flight 32 is rotatably connected to the deck area 28. The rotating connections allow the gangway 30 to be lowered toward water level in order to place the access platform 36 at deck level for a vessel 33 below. When the gangway 30 is not in use the access platform 36 can be retracted and raised to a stowed configuration with the upper and lower flights 32, 34 folding together. Figure 12 shows the raised/stowed configuration of the gangway 30 and Figure 13 shows the extended/in use configuration.

A constant tension winch 40 on the deck area 28 is attached to the access platform 36 via cables and supports the vertical load that arises from the weight of the gangway 30. The winch 40 is used to raise and lower the gangway 30. When a vessel 33 is present and the gangway 30 is lowered the access platform 36 sits on the deck of the vessel. As the vessel 33 rises and falls due to water movement the constant tension winch 40 will raise and lower the gangway 30 to match the movement of the vessel 33. As a result the access platform 36 will not move up and down relative to the vessel 33, which will make it easier to use the gangway 30.

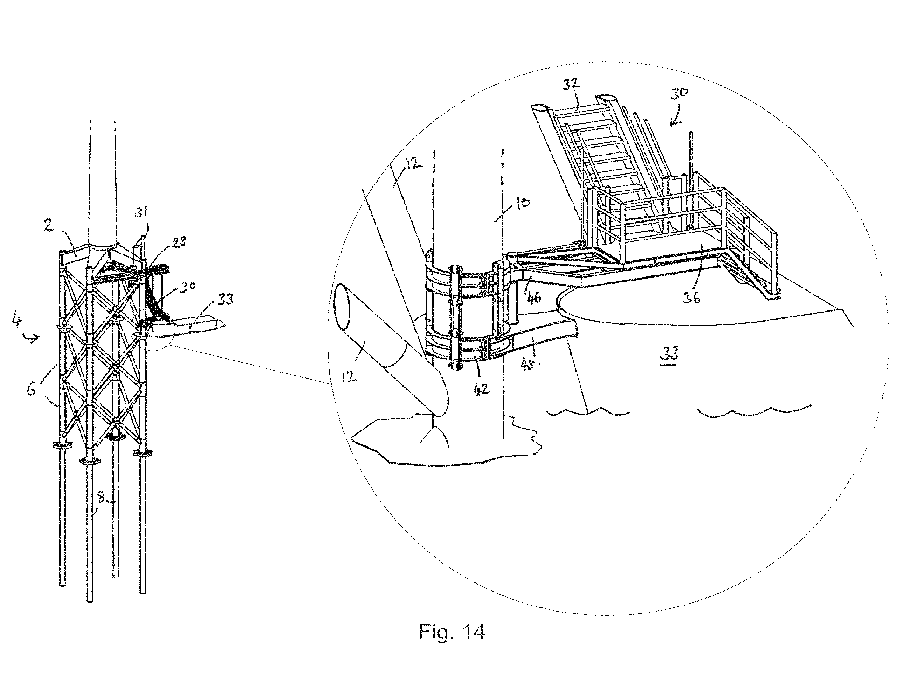

An important feature of the gangway 30 is the connection of the base of the stairway to the leg 10 of the uppermost jacket module 6. This is shown in more detail in Figure 14, which includes a close up view of the base of the stairway shown in the deployed configuration with a vessel present. A collar 42 around the leg 10 guides the vertical movement of the access platform 36 and prevents it from moving horizontally. The collar 42 also provides a reaction force to support horizontal loads arising from the weight of the gangway 30. It will be understood that since the stairway extends sideways from its mounting point at the deck area 28 then a moment is created about the mounting point to the deck area 28. The collar 42 provides a horizontal reaction against this moment in order to support the offset gangway 30. The collar 42 includes guide wheels 44 so that it can move smoothly up and down the leg 10. The connection of the upper flight 34 to the deck area 28 also bears a horizontal load, which is equivalent to the horizontal reaction at the collar 42, but in the opposite direction.

The collar 42 is connected to the access platform 36 by a shaft 46. Also connected to the collar 42 is a bumper 48. The bumper 48 is designed to receive the prow of the vessel 33 and to hence keep the vessel 33 fixed in place horizontally. The vessel 33 can use a small amount of thrust to keep the prow of the vessel 33 pressed against the bumper 48. The bumper 48 will move up and down with the vessel 33 since, as with the access platform 36, it is supported by the constant tension winch 40.

## Claims

1. A jacket (4) for an offshore structure, the jacket comprising:
a plurality of jacket modules (6) stacked one above the other, each of the jacket modules having multiple hollow legs (10); and
a plurality of piles (8) passing through the hollow legs for securing the jacket to the sea-bed;
**characterised in that** the piles include:
foundation piles (8a) passing through legs of a lowermost jacket module, with a lower part of each foundation pile extending downward below the lowermost jacket module (6a) into the sea-bed, and an upper part of the each foundation pile extending upward out of the tops of the legs of the lowermost jacket module and into legs of a second jacket module (6b) located atop the lowermost jacket module such that the upper parts of the foundation piles extend into the legs of the second jacket module by a height less than the height of the jacket modules; and
follower piles (8b) within the legs of the second jacket module located atop the upper parts of the foundation piles and extending upward out of the tops of the legs of the second jacket module.

2. A jacket (4) as claimed in claim 1, wherein the piles (8) are arranged to extend upwardly out of the legs (10) of the jacket module (6) by different amounts, such that there is a first guide pile that extends upwardly by a greater length than the other piles, and a second guide pile that extends upwardly by a length less than the first guide pile but greater than the remaining piles.

3. A jacket (4) as claimed in claim 1, comprising: a third jacket module (6c) atop the second jacket module (6b), with the follower piles (8b) in the legs (10) of the second jacket module being a first set of follower piles and extending upward into the legs of the third jacket module; and a second set of follower piles (8c) within the legs of the third jacket module located atop the first set of follower piles and extending upward out of the tops of the legs of the third jacket module.

4. A jacket (4) as claimed in any of claims 1, 2, or 3, wherein the piles (8) are secured within the legs (10) of the jacket modules (6) by grout (23).

5. A jacket (4) as claimed in any preceding claim, comprising a transition piece (2) for mounting a tower, such as a wind turbine tower, the transition piece being mounted on the exposed parts of the uppermost follower piles (8) above the uppermost jacket module (6).

6. A jacket (4) as claimed in claim 5, wherein the transition piece (2) is prefabricated onshore and comprises: a central structure for supporting a tower or the like and outer connecting parts for coupling to the exposed parts of the uppermost follower piles (8); and wherein the outer connecting parts are hollow tubes placed on the exposed parts of the uppermost follower piles, and grout (23) is used to secure the transition piece to the jacket modules (6).

7. A jacket (4) as claimed in any preceding claim, wherein the hollow legs (10) include internal lugs (20) for locating the piles (8) at the centre of the legs and spacing the piles away from the walls of the legs.

8. A jacket (4) as claimed in any preceding claim, wherein the ends of the piles (8) are shaped for interlocking fit with the next follower pile.

9. A jacket as claimed in any preceding claim, comprising a J-tube with an angled section comprising a lower generally horizontal part for receiving a cable running generally horizontally along the floor, a bend that turns the cable through about a right angle, and an upper generally vertical part so that the cable exits the angled section running generally vertically, wherein the J-tube does not include a vertical tube extending up the entire height of the jacket.

10. An offshore wind turbine comprising a jacket (4) as claimed in any preceding claim.

11. A method of installation of a jacket (4) for an offshore structure, the jacket comprising: a plurality of jacket modules (6), each of the jacket modules having multiple hollow legs (10); and a plurality of piles (8); wherein the method comprises:
locating a first, lowermost, jacket module (6a) on the sea-bed; and is **characterised by** the piles including foundation piles (8a) and follower piles (8b), and by installing said foundation piles (8a) through the legs of this lowermost jacket module such that lower parts of the foundation piles extend downward below the lowermost jacket module into the sea-bed and upper parts of the foundation piles extend upward out of the tops of the legs of the lowermost jacket module by a height less than the height of the jacket modules;
locating a second jacket module (6b) atop the lowermost jacket module such that the upper parts of the foundation piles extend into the legs of the second jacket module; and
installing said follower piles (8b) within the legs of the second jacket module such that the follower piles are located atop the upper parts of the foundation piles and extend upward out of the tops of the legs of the second jacket module.

12. A method as claimed in claim 11, the jacket (4) being as claimed in any of claims 1 to 9.

13. A method as claimed in claim 11 or 12, comprising grouting (23) about the piles (8) inside the hollow legs (10) in order to thereby secure the piles within the legs, wherein the grout is pumped into the legs around the piles after assembly of all the jacket modules (6) and piles is completed.

14. A kit of parts for a jacket (4), the kit of parts comprising:
a plurality of jacket modules (6) arranged to be stacked one above the other, each of the jacket modules having multiple hollow legs (10); and
a plurality of piles (8) arranged for passing through the hollow legs for securing the jacket to the sea-bed;
**characterised in that** the piles include: foundation piles (8a) for passing through legs of a lowermost jacket module (6a), the foundation piles including lower parts for extending downward below the lowermost jacket module into the sea-bed and upper parts for extending upward out of the tops of the legs of the lowermost jacket module and into legs of a second jacket module (6b) located atop the lowermost jacket module such that the upper parts of the foundation piles extend into the legs of the second jacket module by a height less than the height of the jacket modules; and
follower piles (8b) for installation within the legs of the second jacket module located atop the upper parts of the foundation piles and extending upward out of the tops of the legs of the second jacket module.

15. A kit of parts as claimed in claim 14, wherein the jacket modules (6) and/or piles (8) are as claimed in any of claims 1 to 9.

## Patentansprüche

1. Ein Jacket (4) für eine Offshorestruktur, wobei das Jacket aufweist:
eine Mehrzahl von eines über dem anderen gestapelten Jacket-Modulen (6), wobei jedes der Jacket-Module mehrere hohle Beine (10) hat; und
eine Mehrzahl von die hohlen Beine durchlaufenden Pfählen (8) zum Sichern des Jackets am Meeresboden;
**dadurch gekennzeichnet, dass** die Pfähle umfassen:
Fundamentierungspfähle (8a) die durch Beine eines untersten Jacket-Moduls laufen, wobei ein unterer Teil eines jeden Fundamentierungspfahls sich unterhalb des untersten Jacket-Moduls (6a) nach unten in den Meeresboden erstreckt, und ein oberer Teil eines jeden Fundamentierungspfahls sich noch oben aus den Spitzen der Beine des untersten Jacket-Moduls heraus und in Beine eines zweiten Jacket-Moduls (6b) hinein erstreckt, welches sich oben auf dem untersten Jacket-Modul befindet, so dass die oberen Teile der Fundamentierungspfähle sich in die Beide des zweiten Jacket-Moduls um eine Höhe erstrecken, die geringer ist als die Höhe der Jacket-Module; und
Nachfolgepfähle (8b) innerhalb der Beine des zweiten Jacket-Moduls, welche sich oben auf den oberen Teilen der Fundamentierungspfähle befinden und sich nach oben aus den Spitzen der Beine des zweiten Jacket-Moduls heraus erstrecken.

2. Ein Jacket (4) wie in Anspruch 1 beansprucht, wobei die Pfähle (8) angeordnet sind, um sich nach oben aus den Beinen (10) des Jacket-Moduls (6) heraus um unterschiedliche Beträge erstrecken, so dass es einen ersten Führungspfahl gibt, der sich nach oben um eine größere Länge erstreckt als die anderen Pfähle, und einen zweiten Führungspfahl, der sich nach oben um eine Länge erstreckt, die geringer ist als die des ersten Führungspfahls, aber größer als die der übrigen Pfähle.

3. Ein Jacket (4) wie in Anspruch 1 beansprucht, aufweisend:
ein drittes Jacket-Modul (6c) oben auf dem zweiten Jacket-Modul (6b), wobei die Nachfolgepfähle (8b) in den Beinen (10) des zweiten Jacket-Moduls ein erster Satz von Nachfolgepfählen sind und sich nach oben in die Beine des dritten Jacket-Moduls erstrecken; und
einen zweiten Satz von Nachfolgepfählen (8c) innerhalb der Beine des dritten Jacket-Moduls, welche sich oben auf dem ersten Satz von Nachfolgepfählen befinden und sich nach oben aus den Spitzen der Beine des dritten Jacket-Moduls heraus erstrecken.

4. Ein Jacket (4) wie in Anspruch 1, 2 oder 3 beansprucht, wobei die Pfähle (8) innerhalb der Beine (10) der Jacket-Module (6) mit Mörtel (23) gesichert sind.

5. Ein Jacket (4) wie in einem der voranstehenden Ansprüche beansprucht, aufweisend ein Übergangsstück (2) zum Anbringen eines Turms, wie etwa eines Windturbinenturms, wobei das Übergangsstück an den freiliegenden Teilen der obersten Nachfolgepfähle (8) über dem obersten Jacket-Modul (6) angebracht ist.

6. Ein Jacket (4) wie in Anspruch 5 beansprucht, wobei das Übergangsstück (2) an Land vorgefertigt wird und aufweist:
eine zentrale Struktur zum Stützen eines Turms oder dergleichen und äußere Verbindungsteile zum Koppeln an die freiliegenden Teile der obersten Nachfolgepfähle (8); und wobei die äußeren Verbindungsteile hohle Röhren sind, die auf den freiliegenden Teilen der obersten Nachfolgepfähle platziert werden, und Mörtel (23) verwendet wird, um das Übergangsstück an den Jacket-Modulen (6) zu sichern.

7. Ein Jacket (4) wie in einem der voranstehenden Ansprüche beansprucht, wobei die hohlen Beine (10) interne Vorsprünge (20) umfassen, um die Pfähle (8) in der Mitte der Beine festzulegen und die Pfähle mit Abständen weg von den Wänden der Beine anzuordnen.

8. Ein Jacket (4) wie in einem der voranstehenden Ansprüche beansprucht, wobei die Enden der Pfähle (8) für den verriegelnden Schluss mit dem nächsten Nachfolgepfahl geformt sind.

9. Ein Jacket wie in einem der voranstehenden Ansprüche beansprucht, aufweisend eine J-Röhre mit einem gewinkelten Abschnitt, der aufweist
einen unteren, im Allgemeinen horizontalen Teil für die Aufnahme eines Kabels, das im Allgemeinen horizontal entlang des Bodens verläuft,
eine Biegung, die das Kabel um einen rechten Winkel umlenkt, und
einen oberen, im allgemeinen vertikalen Teil, so dass das Kabel im Allgemeinen vertikal verlaufend aus dem gewinkelten Abschnitt heraustritt, wobei die J-Röhre keine vertikale Röhre umfasst, die sich um die gesamte Höhe des Jackes hinauf erstreckt.

10. Eine Offshore-Windturbine, die ein Jacket (4) wie in einem der voranstehenden Ansprüche beansprucht aufweist.

11. Ein Verfahren zur Installation eines Jackets (4) für eine Offshorestruktur, wobei das Jacket aufweist:
eine Mehrzahl von Jacket-Modulen (6), wobei jedes Jacket-Modul mehrere hohle Beine (10) hat; und eine Mehrzahl von Pfählen (8); wobei das Verfahren aufweist:
Festlegen eines ersten, untersten Jacket-Moduls (6a) auf dem Meeresboden;
und **gekennzeichnet ist dadurch** dass die Pfähle Fundamentierungspfähle (8a) und Nachfolgepfähle (8b) umfassen, und **durch** Installieren der genannten Fundamentierungspfähle (8a) durch die Beine dieses untersten Jacket-Moduls, so dass untere Teile der Fundamentierungspfähle sich unterhalb des untersten Jacket-Moduls nach unten in den Meeresboden erstrecken und obere Teile der Fundamentierungspfähle sich noch oben aus den Spitzen der Beine des untersten Jacket-Moduls heraus um eine Höhe erstrecken, die geringer ist als die Höhe der Jacket-Module;
Festlegen eines zweiten Jacket-Moduls (6b) oben auf dem untersten Jacket-Modul, so dass die oberen Teile der Fundamentierungspfähle sich in die Beide des zweiten Jacket-Moduls erstrecken; und
Installieren der genannten Nachfolgepfähle (8b) innerhalb der Beine des zweiten Jacket-Moduls, so dass die Nachfolgepfähle sich oben auf den oberen Teilen der Fundamentierungspfähle befinden und sich nach oben aus den Spitzen der Beine des zweiten Jacket-Moduls heraus erstrecken.

12. Ein Verfahren wie in Anspruch 11 beansprucht, wobei das Jacket (4) so ist, wie in einem der Ansprüche 1 bis 9 beansprucht.

13. Ein Verfahren wie in Anspruch 11 oder 12 beansprucht, aufweisend Mörteln (23) um die Pfähle (8) in den hohlen Beinen (10), um die Pfähle damit innerhalb der Beine zu sichern, wobei der Mörtel in die Beine um die Pfähle gepumpt wird, nachdem alle Jacket-Module (6) und Pfähle fertig zusammengesetzt sind.

14. Ein Bausatz von Teilen für ein Jacket (4), wobei der Bausatz von Teilen aufweist:
eine Mehrzahl von Jacket-Modulen (6), die angeordnet sind um, eines über dem anderen, gestapelt zu werden, wobei jedes der Jacket-Module mehrere hohle Beine (10) hat; und
eine Mehrzahl von Pfählen (8), die angeordnet sind um durch die hohlen Beine zu laufen zum Sichern des Jackets am Meeresboden;
**dadurch gekennzeichnet, dass** die Pfähle umfassen:
Fundamentierungspfähle (8a) um durch Beine eines untersten Jacket-Moduls (6a) zu laufen, wobei die Fundamentierungspfähle untere Teile umfassen, um sich unterhalb des untersten Jacket-Moduls nach unten in den Meeresboden zu erstrecken, und obere Teile, um sich nach oben aus den Spitzen der Beine des untersten Jacket-Moduls heraus und in Beine eines zweiten Jacket-Moduls (6b) hinein zu erstrecken, welches sich oben auf dem untersten Jacket-Modul befindet, so dass die oberen Teile der Fundamentierungspfähle sich in die Beide des zweiten Jacket-Moduls um eine Höhe erstrecken, die geringer ist als die Höhe der Jacket-Module; und
Nachfolgepfähle (8b) für die Installation innerhalb der Beine des zweiten Jacket-Moduls, welche sich oben auf den oberen Teilen der Fundamentierungspfähle befinden und sich nach oben aus den Spitzen der Beine des zweiten Jacket-Moduls heraus erstrecken.

15. Ein Bausatz von Teilen wie in Anspruch 14 beansprucht, wobei die Jacket-Module (6) und/oder Pfähle (8) so sind wie in einem der Ansprüche 1 bis 9 beansprucht.

## Revendications

1. Treillis (4) pour une structure marine, le treillis comprenant :
une pluralité de modules de treillis (6) empilés les uns sur les autres, chacun des modules de treillis ayant plusieurs jambes creuses (10) ; et
une pluralité de piles (8) passant à travers les jambes creuses pour fixer le treillis sur le fond marin ;
**caractérisé en ce que** les piles comprennent :
des piles de fondation (8a) passant à travers les jambes du module de treillis le plus bas, avec une partie inférieure de chaque pile de fondation qui s'étend vers le bas sous le module de treillis le plus bas (6a) dans le fond marin, et une partie supérieure de chaque pile de fondation s'étendant vers le haut hors des parties supérieures des jambes du module de treillis le plus bas et dans les jambes d'un deuxième module de treillis (6b) positionné sur le dessus du module de treillis le plus bas de sorte que les parties supérieures des piles de fondation s'étendent dans les jambes du deuxième module de treillis sur une hauteur inférieure à la hauteur des modules de treillis ; et
des piles de prolongement (8b) à l'intérieur des jambes du deuxième module de treillis positionnées sur le dessus des parties supérieures des piles de fondation et s'étendant vers le haut hors des parties supérieures des jambes du deuxième module de treillis.

2. Treillis (4) selon la revendication 1, dans lequel les piles (8) sont agencées pour s'étendre vers le haut hors des jambes (10) du module de treillis (6) selon différentes quantités, de sorte qu'il y a une première pile de guidage qui s'étend vers le haut selon une longueur supérieure aux autres piles, et une seconde pile de guidage qui s'étend vers le haut selon une longueur inférieure à la première pile de guidage mais supérieure aux piles résiduelles.

3. Treillis (4) selon la revendication 1, comprenant : un troisième module de treillis (6c) sur le deuxième module de treillis (6b), avec les piles de prolongement (8b) dans les jambes (10) du deuxième module de treillis qui sont un premier ensemble de piles de prolongement et qui s'étendent vers le haut dans les jambes du troisième module de treillis ; et un second ensemble de piles de prolongement (8c) à l'intérieur des jambes du troisième module de treillis situé sur le premier ensemble de piles de prolongement et s'étendant vers le haut hors des parties supérieures des jambes du troisième module de treillis.

4. Treillis (4) selon l'une quelconque des revendications 1, 2 ou 3, dans lequel les piles (8) sont fixées à l'intérieur des jambes (10) des modules de treillis (6) par coulis (23).

5. Treillis (4) selon l'une quelconque des revendications précédentes, comprenant une pièce de transition (2) pour monter une tour, telle qu'une tour d'éolienne, la pièce de transition étant montée sur les parties exposées des piles de prolongement les plus hautes (8) au-dessus du module de treillis le plus haut (6).

6. Treillis (4) selon la revendication 5, dans lequel la pièce de transition (2) est préfabriquée à terre et comprend : une structure centrale pour supporter une tour ou similaire et des parties de raccordement externes pour se coupler aux parties exposées des piles de prolongement les plus hautes (8); et dans lequel les parties de raccordement externes sont des tubes creux placés sur les parties exposées des piles de prolongement les plus hautes, et on utilise du coulis (23) pour fixer la pièce de transition sur les modules de treillis (6).

7. Treillis (4) selon l'une quelconque des revendications précédentes, dans lequel les jambes creuses (10) comprennent des pattes internes (20) pour positionner les piles (8) au centre des jambes et éloigner les piles des parois des jambes.

8. Treillis (4) selon l'une quelconque des revendications précédentes, dans lequel les extrémités des piles (8) sont formées pour s'emboîter avec la pile de prolongement suivante.

9. Treillis selon l'une quelconque des revendications précédentes, comprenant un tube en J avec une section coudée comprenant une partie inférieure généralement horizontale pour recevoir un câble s'étendant généralement horizontalement le long du plancher, un coude qui fait tourner le câble en angle droit et une partie supérieure généralement verticale de sorte que le câble sort de la section coudée s'étendant généralement verticalement, dans lequel le tube en J ne comprend pas de tube vertical qui s'étend sur toute la hauteur du treillis.

10. Eolienne marine comprenant un treillis (4) selon l'une quelconque des revendications précédentes.

11. Procédé pour installer un treillis (4) pour une structure marine, le treillis comprenant : une pluralité de modules de treillis (6), chacun des modules de treillis ayant plusieurs jambes creuses (10) ; et une pluralité de piles (8); dans lequel le procédé comprend les étapes consistant à :
positionner le premier module de treillis le plus bas (6a) sur le fond marin ; et est **caractérisé par** :
les piles comprenant des piles de fondation (8a) et des piles de prolongement (8b) et par l'étape consistant à installer lesdites piles de fondation (8a) à travers les jambes de ce module de treillis le plus bas de sorte que les parties inférieures des piles de fondation s'étendent vers le bas au-dessous du module de treillis le plus bas dans le fond marin et des parties supérieures des piles de fondation s'étendent vers le haut à l'extérieur des parties supérieures des jambes du module de treillis le plus bas selon une hauteur des modules de treillis ;
positionner un deuxième module de treillis (6b) au-dessus du module de treillis le plus bas de sorte que les parties supérieures des piles de fondation s'étendent dans les jambes du deuxième module de treillis ; et
installer lesdites piles de prolongement (8b) à l'intérieur des jambes du deuxième module de treillis de sorte que les piles de prolongement sont positionnées sur les parties supérieures des piles de fondation et s'étendent vers le haut à l'extérieur des parties supérieures des jambes du deuxième module de treillis.

12. Procédé selon la revendication 11, le treillis (4) étant selon l'une quelconque des revendications 1 à 9.

13. Procédé selon la revendication 11 ou 12, comprenant l'étape consistant à verser un coulis (23) autour des piles (8) à l'intérieur des jambes creuses (10) afin de fixer ainsi les piles à l'intérieur des jambes, dans lequel le coulis est pompé dans la jambes autour des piles après que l'assemblage de tous les modules de treillis (6) et des piles a été terminé.

14. Kit de pièces pour un treillis (4), le kit de pièces comprenant :
une pluralité de modules de treillis (6) agencés pour être empilés les uns sur les autres, chacun des modules de treillis ayant plusieurs jambes creuses (10) ; et
une pluralité de piles (8) agencées pour passer à travers les jambes creuses pour fixer le treillis dans le fond marin ;
**caractérisé en ce que** les piles comprennent : des piles de fondation (8a) pour passer à travers les jambes du module de treillis le plus bas (6a), les piles de fondation comprenant des parties inférieures pour s'étendre vers le bas au-dessous du module de treillis le plus bas dans le fond marin et des parties supérieures pour s'étendre vers le haut à l'extérieur des parties supérieures des jambes du module de treillis le plus bas et dans les jambes d'un deuxième module de treillis (6b) situé au-dessus du module de treillis le plus bas de sorte que les parties supérieures des piles de fondation s'étendent dans les jambes du deuxième module de treillis selon une hauteur inférieure à la hauteur des modules de treillis ; et
des piles de prolongement (8b) pour l'installation à l'intérieur des jambes du deuxième module de treillis situé au-dessus des parties supérieures des piles de fondation et s'étendant vers le haut hors des parties supérieures des jambes du deuxième module de treillis.

15. Kit de pièces selon la revendication 14, dans lequel les modules de treillis (6) et/ou de piles (8) sont selon l'une quelconque des revendications 1 à 9.
